# EUROPEAN PATENT APPLICATION

(11) **EP 4 848 189 A1**
(43) Date of publication of application: **02.12.2026**
(21) Application number: 24920217.7
(22) Date of filing: 26.01.2024
(51) Int. Cl.: G06Q 50/04, G06Q 10/06

(54) **OPERATION PLAN CREATION DEVICE, OPERATION PLAN CREATION METHOD, AND COMPUTER PROGRAM**

(71) Applicant: ASAHI KASEI KABUSHIKI KAISHA, Tokyo 100-0006 (JP)
(72) Inventor: FUNATANI, Kengo, Yokohama-shi, Kanagawa 220-6001 (JP); SHIMADA, Yohei, Yokohama-shi, Kanagawa 220-6001 (JP); TAKAKUWA, Shuya, Yokohama-shi, Kanagawa 220-6001 (JP); KAI, Mototaka, Yokohama-shi, Kanagawa 220-6001 (JP); OHNO, Jun, Tokyo 100-0006 (JP); NAKAYAMA, Masahiko, Tokyo 100-0006 (JP); KONDA, Masahiro, Tokyo 100-0006 (JP); WATANABE, Hiroshi, Tokyo 100-0006 (JP)
(74) Representative: dompatent
(86) International application number: PCT/JP2024/002511
(87) International publication number: WO 2025/158667

(57) **Abstract**

An operation plan creation device calculates, when a total hydrogen supply initially predicted volume exceeds a total hydrogen demand predicted volume, time-series data that indicates a hydrogen demand cumulative planned volume so that, in all calculation periods of an operation plan period, the hydrogen demand cumulative planned volume falls below a first added volume obtained by adding a cumulative total of initially predicted hydrogen production volumes to a remaining hydrogen volume in a tank, and calculates, when the total hydrogen supply initially predicted volume does not exceed the total hydrogen demand predicted volume, time-series data that indicates the hydrogen demand cumulative planned volume so that, in all calculation periods of the operation plan period, the hydrogen demand cumulative planned volume falls below a second added volume obtained by adding the first added volume and a cumulative total of predicted volumes of an additional hydrogen production volume obtained with use of added electric power.

## Description

### Technical Field

The present invention relates to an operation plan creation device, an operation plan creation method, and a computer program.

### Background Art

In order to achieve a carbon-neutral and decarbonized society, the use of variable renewable energy (VRE) such as solar and wind power, for which output is dependent on the weather, is expected to become increasingly widespread in the future. As a form of a method of using the variable renewable energy, it is conceivable that hydrogen is manufactured by using the variable renewable energy and the manufactured hydrogen is at least temporarily accumulated to be used in a post-process.

An electrolysis system is described in Patent Literature 1. The electrolysis system has a power generation device, a power distribution device, an electrolysis device, and a pressure raising device. The power generation device generates electric power by using renewable energy. The power distribution device distributes the generated electric power. The electrolysis device executes electrolysis of water by using the distributed electric power. The pressure raising device raises the pressure of hydrogen and oxygen generated by the electrolysis device by using the distributed electric power (surplus electric power exceeding power consumption of the electrolysis device).

### Citation List

### Patent Literature

[PTL 1] JP 2019-026858 A

### Summary of Invention

### Technical Problem

Hydrogen produced by a hydrogen production device that uses electric power generated with use of renewable energy serves as a raw material at a chemical plant which produces a chemical substance (chemical product), for example, ammonia, and creation of an operation plan of the chemical plant is a matter to be addressed.

An object of the present invention is to provide an operation plan creation device, an operation plan creation method, and a computer program which enable creation of an operation plan of a chemical plant that produces a chemical product from raw materials including hydrogen produced by a hydrogen production device that uses electric power generated with use of renewable energy.

### Solution to Problem

According to one aspect of the present invention, there is provided an operation plan creation device for creating an operation plan of a chemical plant including a hydrogen production device for producing hydrogen by using electric power generated with use of renewable energy, a chemical production device for producing a chemical product from raw materials that include the hydrogen produced by the hydrogen production device, and an intermediate tank provided between the hydrogen production device and the chemical production device to retain, for buffering, the hydrogen produced by the hydrogen production device, the operation plan creation device including: an acquisition module configured to acquire a total hydrogen supply initially predicted volume, a total hydrogen demand predicted volume, and first time-series data which indicates a first added volume, the total hydrogen supply initially predicted volume being an initially predicted volume of a total supply of hydrogen in an operation plan period, the total hydrogen demand predicted volume being a predicted volume of a total demand of hydrogen in the operation plan period, the first added volume being obtained by adding, to a remaining hydrogen volume in the intermediate tank at a start of the operation plan period, a cumulative total of initially predicted volumes predicted for a hydrogen production volume of the hydrogen production device in the operation plan period; and a planning module configured to: determine whether the total hydrogen supply initially predicted volume exceeds the total hydrogen demand predicted volume; calculate, in a case in which the total hydrogen supply initially predicted volume exceeds the total hydrogen demand predicted volume, time-series data that indicates a hydrogen demand cumulative planned volume which is a cumulative planned volume of a demand of hydrogen as a raw material of the chemical production device in the operation plan period so that the hydrogen demand cumulative planned volume falls below the first added volume in all calculation periods of the operation plan period; and acquire, in an opposite case in which the total hydrogen supply initially predicted volume is equal to or less than the total hydrogen demand predicted volume, via the acquisition module, second time-series data which indicates a cumulative total of predicted volumes predicted for an additional production volume of hydrogen that is produced by the hydrogen production device with use of added electric power, and calculate time-series data that indicates the hydrogen demand cumulative planned volume so that, in all calculation periods of the operation plan period, the hydrogen demand cumulative planned volume falls below a second added volume obtained by adding the first added volume of the first time-series data and the cumulative total indicated by the second time-series data.

According to one aspect of the present invention, in the above-mentioned operation plan creation device, the planning module is configured to: calculate, in the case in which the total hydrogen supply initially predicted volume exceeds the total hydrogen demand predicted volume, the time-series data that indicates the hydrogen demand cumulative planned volume so that a sum of a difference between the first added volume and the hydrogen demand cumulative planned volume in each of the calculation periods of the operation plan period is maximized; and calculate, in the opposite case in which the total hydrogen supply initially predicted volume is equal to or less than the total hydrogen demand predicted volume, the time-series data that indicates the hydrogen demand cumulative planned volume so that a sum of a difference between the second added volume and the hydrogen demand cumulative planned volume in each of the calculation periods of the operation plan period is maximized.

According to one aspect of the present invention, in the above-mentioned operation plan creation device: the chemical plant further includes a product tank configured to retain, for shipment, the hydrogen produced by the hydrogen production device; as the first added value, a sum volume that is obtained by summing up remaining hydrogen volumes in the intermediate tank and the product tank at a start of the operation plan period and a cumulative total of initially predicted volumes predicted for a hydrogen production volume of the hydrogen production device in the operation plan period is used; as the hydrogen demand cumulative planned volume, a sum volume that is obtained by summing up a planned shipment volume of hydrogen in the operation plan period and the cumulative planned volume of the demand of hydrogen as a raw material of the chemical production device in the operation plan period is used; and as a constraint condition to be used in calculation of the time-series data that indicates the hydrogen demand cumulative planned volume, that the remaining hydrogen volume in the product tank on a shipment day of hydrogen in the operation plan period is equal to or more than the planned shipment volume is added.

According to one aspect of the present invention, in the above-mentioned operation plan creation device, the planning module is configured to issue alarm when it is determined that a planned shipment volume of the chemical product fails to be fulfilled based on the time-series data that indicates the hydrogen demand cumulative planned volume.

According to one aspect of the present invention, there is provided an operation plan creation method of creating an operation plan of a chemical plant including a hydrogen production device for producing hydrogen by using electric power generated with use of renewable energy, a chemical production device for producing a chemical product from raw materials that include the hydrogen produced by the hydrogen production device, and an intermediate tank provided between the hydrogen production device and the chemical production device to retain, for buffering, the hydrogen produced by the hydrogen production device, the operation plan creation method including: a first step of acquiring a total hydrogen supply initially predicted volume which is an initially predicted volume of a total supply of hydrogen in an operation plan period, and a total hydrogen demand predicted volume which is a predicted volume of a total demand of hydrogen in the operation plan period; a second step of acquiring first time-series data which indicates a first added volume obtained by adding, to a remaining hydrogen volume in the intermediate tank at a start of the operation plan period, a cumulative total of initially predicted volumes predicted for a hydrogen production volume of the hydrogen production device in the operation plan period; a third step of determining whether the total hydrogen supply initially predicted volume exceeds the total hydrogen demand predicted volume; a fourth step of calculating, in a case in which the total hydrogen supply initially predicted volume exceeds the total hydrogen demand predicted volume, time-series data that indicates a hydrogen demand cumulative planned volume which is a cumulative planned volume of a demand of hydrogen as a raw material of the chemical production device in the operation plan period so that the hydrogen demand cumulative planned volume falls below the first added volume in all calculation periods of the operation plan period; and a fifth step of acquiring, in a case in which the total hydrogen supply initially predicted volume is equal to or less than the total hydrogen demand predicted volume, second time-series data which indicates a cumulative total of predicted volumes predicted for an additional production volume of hydrogen that is produced by the hydrogen production device with use of added electric power, and calculating time-series data that indicates the hydrogen demand cumulative planned volume so that, in all calculation periods of the operation plan period, the hydrogen demand cumulative planned volume falls below a second added volume obtained by adding the first added volume of the first time-series data and the cumulative total indicated by the second time-series data.

According to one aspect of the present invention, there is provided a computer program for causing a computer, which is included in an operation plan creation device for creating an operation plan of a chemical plant including a hydrogen production device for producing hydrogen by using electric power generated with use of renewable energy, a chemical production device for producing a chemical product from raw materials that include the hydrogen produced by the hydrogen production device, and an intermediate tank provided between the hydrogen production device and the chemical production device to retain, for buffering, the hydrogen produced by the hydrogen production device, to execute: a first step of acquiring a total hydrogen supply initially predicted volume which is an initially predicted volume of a total supply of hydrogen in an operation plan period, and a total hydrogen demand predicted volume which is a predicted volume of a total demand of hydrogen in the operation plan period; a second step of acquiring first time-series data which indicates a first added volume obtained by adding, to a remaining hydrogen volume in the intermediate tank at a start of the operation plan period, a cumulative total of initially predicted volumes predicted for a hydrogen production volume of the hydrogen production device in the operation plan period; a third step of determining whether the total hydrogen supply initially predicted volume exceeds the total hydrogen demand predicted volume; a fourth step of calculating, in a case in which the total hydrogen supply initially predicted volume exceeds the total hydrogen demand predicted volume, time-series data that indicates a hydrogen demand cumulative planned volume which is a cumulative planned volume of a demand of hydrogen as a raw material of the chemical production device in the operation plan period so that the hydrogen demand cumulative planned volume falls below the first added volume in all calculation periods of the operation plan period; and a fifth step of acquiring, in a case in which the total hydrogen supply initially predicted volume is equal to or less than the total hydrogen demand predicted volume, second time-series data which indicates a cumulative total of predicted volumes predicted for an additional production volume of hydrogen that is produced by the hydrogen production device with use of added electric power, and calculating time-series data that indicates the hydrogen demand cumulative planned volume so that, in all calculation periods of the operation plan period, the hydrogen demand cumulative planned volume falls below a second added volume obtained by adding the first added volume of the first time-series data and the cumulative total indicated by the second time-series data.

### Advantageous Effects of Invention

According to the present invention, it is possible to obtain an effect of enabling creation of the operation plan of the chemical plant that produces a chemical product from raw materials including the hydrogen produced by the hydrogen production device that uses electric power generated with use of renewable energy.

### Brief Description of Drawings

FIG. 1 is a diagram for illustrating a schematic configuration example of an operation plan creation system in an embodiment of the present invention.
FIG. 2 is a diagram for illustrating a schematic configuration example of an operation plan creation device according to the embodiment.
FIG. 3 is a flow chart for illustrating an example of steps of an operation plan creation method according to the embodiment.
FIG. 4 is an explanatory graph for showing a method of calculating time-series data that indicates a hydrogen demand cumulative planned volume in the embodiment, without power purchase taken into account.
FIG. 5 is an explanatory graph for showing the method of calculating time-series data that indicates a hydrogen demand cumulative planned volume in the embodiment, without power purchase taken into account.
FIG. 6 is an explanatory graph for showing a method of calculating time-series data that indicates a hydrogen demand cumulative planned volume in the embodiment, with power purchase taken into account.
FIG. 7 is an explanatory graph for showing the method of calculating time-series data that indicates a hydrogen demand cumulative planned volume in the embodiment, with power purchase taken into account.

### Description of Embodiments

Next, an operation plan creation device, an operation plan creation method, and a computer program according to an embodiment of the present invention are described with reference to the drawings. The following embodiment described below is described merely as an example, and the present invention can be applied to any embodiment without being limited to the following embodiment. Throughout the drawings for illustrating the embodiment, components having the same function are denoted by identical reference symbols, and a duplicate description thereof is omitted.

Further, "based on XX" as used herein means "based on at least XX," including a case which is based on another element in addition to XX. Further, "based on XX" is not limited to a case in which XX is directly used, and a case which is based on an object obtained by performing calculation or processing on XX is also included. "XX" is any element (for example, any information).

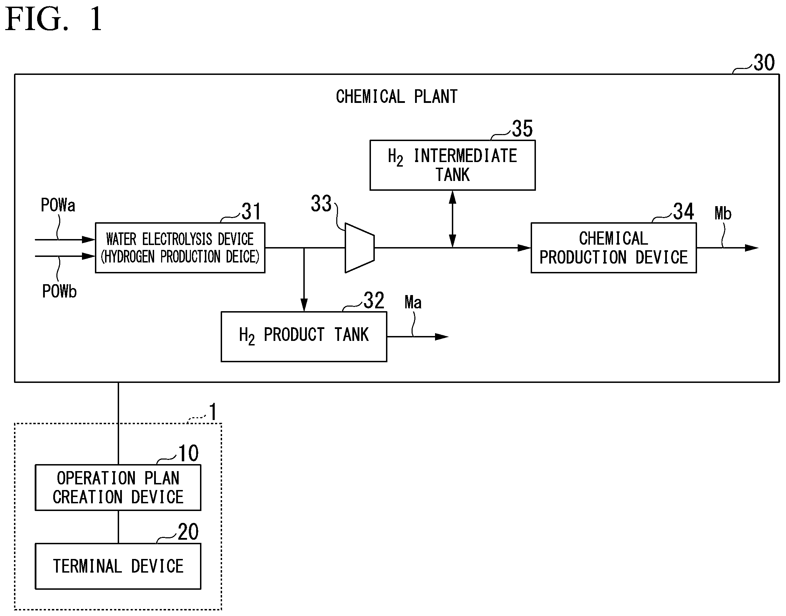

FIG. 1 is a diagram for illustrating a schematic configuration example of an operation plan creation system 1 in this embodiment. In FIG. 1, the operation plan creation system 1 includes an operation plan creation device 10 and a terminal device 20. The operation plan creation device 10 and the terminal device 20 are communicatively connected so that the operation plan creation device 10 and the terminal device 20 can communicate to and from each other. For example, the operation plan creation device 10 and the terminal device 20 may be communicatively connected through use of a communication line or by a communication cable. The terminal device 20 may be, for example, a mobile communication terminal device such as a smartphone or a tablet computer (tablet PC), or may be a stationary communication terminal device (for example, a stationary personal computer). For example, the terminal device 20 may be a mobile communication terminal device such as a smartphone, and may be communicatively connected to the operation plan creation device 10 through use of a wireless communication line.

The operation plan creation device 10 is communicatively connected to a chemical plant 30 through use of a communication line so that the operation plan creation device 10 can communicate to and from the chemical plant 30. For example, the operation plan creation device 10 may be communicatively connected to the chemical plant 30 through use of a communication network such as a local area network (LAN) or the Internet.

The chemical plant 30 is a plant (production facility) that produces a chemical substance (chemical product) from raw materials including hydrogen produced by a hydrogen production device that uses electric power generated with use of renewable energy. Examples of the chemical product include ammonia, methanol, an organic hydride, methane, carbon monoxide, diesel fuel, and hydrogen peroxide.

The chemical plant 30 includes a water electrolysis device 31, an H2 product tank 32, a compressor 33, a chemical production device 34, and an H2 intermediate tank 35. The water electrolysis device 31 is an example of a hydrogen production device for producing hydrogen. The H2 product tank 32 is a product tank which retains hydrogen produced by the water electrolysis device 31 in order to ship the hydrogen. Hydrogen (product hydrogen) Ma as a product is shipped from the H2 product tank 32.

Of the hydrogen produced by the water electrolysis device 31, hydrogen that is not retained in the H2 product tank 32 is raised in pressure by the compressor 33 to be supplied to the chemical production device 34. The chemical production device 34 produces a chemical product Mb with the hydrogen produced by the water electrolysis device 31 as a raw material.

Of the hydrogen that has been raised in pressure by the compressor 33 and supplied to the chemical production device 34, hydrogen that is not immediately put into use as a raw material of the chemical product is temporarily retained in the H2 intermediate tank 35. The H2 intermediate tank 35 is an intermediate tank which retains, for buffering, the hydrogen produced by the water electrolysis device 31.

Power POWa and power POWb to be used in the water electrolysis device 31 are supplied to the water electrolysis device 31. The power POWa is electric power from the chemical plant 30 itself, and is generated solely from renewable energy sources. The power POWb is purchased electric power, and is generated from energy sources which may include non-renewable energy sources. The power POWa is hereinafter referred to as "own power POWa," and the power POWb is hereinafter referred to as "purchased power POWb."

In this embodiment, the own power POWa is electric power generated with use of variable renewable energy sources, such as solar and wind power, as examples of the renewable energy. Accordingly, the own power POWa may be affected by weather.

The operation plan creation device 10 creates an operation plan of the chemical plant 30. In this embodiment, the operation plan creation device 10 creates an operation plan of the chemical plant 30 so that planned shipment volumes of the product hydrogen Ma and the chemical product Mb are fulfilled. When a predetermined alert issuing condition is satisfied in a case in which a situation that hinders fulfilment of the planned shipment volumes is expected to occur, the operation plan creation device 10 transmits alert information to the terminal device 20. The alert information is issued by the terminal device 20. In the case in which a situation that hinders fulfilment of the planned shipment volumes is expected to occur, the operation plan creation device 10 also follows a predetermined operation plan coping strategy in creating an operation plan.

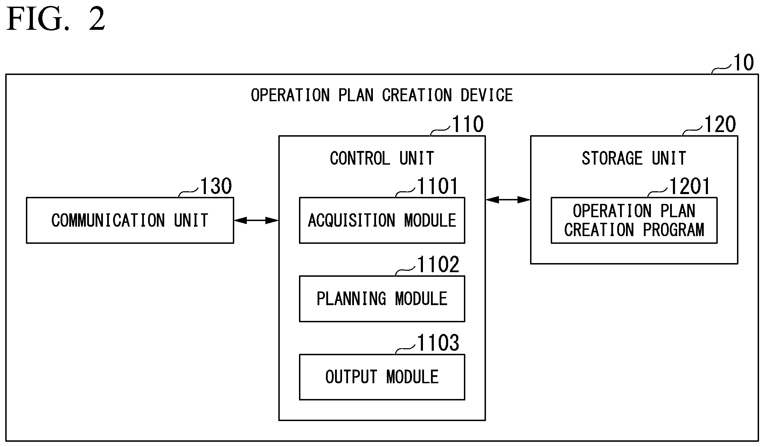

FIG. 2 is a diagram for illustrating a schematic configuration example of the operation plan creation device 10 according to this embodiment. In FIG. 2, the operation plan creation device 10 includes a control unit 110, a storage unit 120, and a communication unit 130.

The control unit 110 is a central processing unit (CPU) which implements various functions by calling and executing programs stored in the storage unit 120.

The control unit 110 includes, as functions thereof, an acquisition module 1101, a planning module 1102, and an output module 1103. Each of those functions is implemented by the CPU executing an operation plan creation program 1201 stored in the storage unit 120.

The storage unit 120 is configured by a storage medium, such as a hard disk drive (HDD), a flash memory, an electrically erasable programmable read-only memory (EEPROM), a random access read/write memory (RAM), a read-only memory (ROM), or any combination of those storage media. The storage unit 120 stores various programs, such as the operation plan creation program 1201, executed by the control unit 110 (CPU), as well as various types of data.

The communication unit 130 communicates to and from external devices of the operation plan creation device 10.

The operation plan creation device 10 may be configured by using a general-purpose computer device, or configured as a dedicated hardware device. For example, the operation plan creation device 10 may be configured by using a server computer connected to a communication network such as the Internet. Further, each of the functions of the operation plan creation device 10 may be implemented by using cloud computing. The operation plan creation device 10 may be implemented by a single computer, or the functions of the operation plan creation device 10 may be distributed to be implemented among a plurality of computers. The operation plan creation device 10 may also be configured to open a website by using, for example, a WWW system.

The acquisition module 1101 acquires information required to create an operation plan of the chemical plant 30 from the chemical plant 30. The planning module 1102 creates the operation plan of the chemical plant 30 based on the information acquired by the acquisition module 1101 from the chemical plant 30. The output module 1103 outputs various types of information including, for example, the operation plan created for the chemical plant 30 by the planning module 1102.

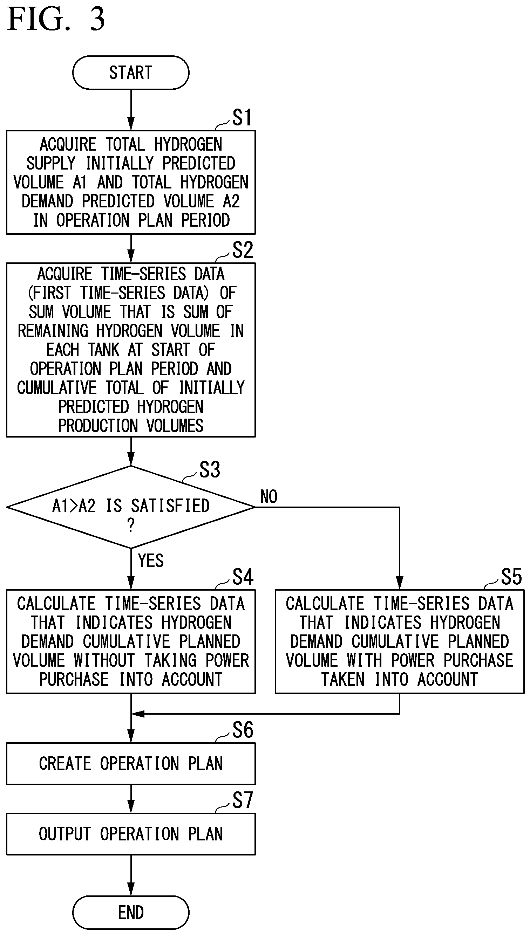

Next, a flow of operation of the operation plan creation device 10 according to this embodiment is described with reference to FIG. 3. FIG. 3 is a flow chart for illustrating an example of steps of an operation plan creation method according to this embodiment.

The operation plan creation method according to this embodiment has prerequisites given below.

### Prerequisites:

(1) The chemical plant 30 is in a normal operation state. Accordingly, there are no mode change from a standby state, shutdown, and the like.
(2) Falling into a state in which stable operation of the chemical plant 30 cannot be maintained and a production shortfall of the chemical product Mb are not allowed. Accordingly, in a case in which the own power POWa is insufficient by itself, the purchased power POWb is procured by power purchase.
(3) A short-term production plan of hydrogen includes the product hydrogen Ma to be shipped and hydrogen to be used as a raw material of the chemical product Mb, and that remaining hydrogen in the H2 product tank 32 on a shipment day of the product hydrogen Ma is equal to or more than a shipment volume is included among constraint conditions.

The operation plan creation device 10 executes processing of FIG. 3 for each operation plan period. A worker uses the terminal device 20 to give designation of specific dates of the operation plan period to the operation plan creation device 10.

(Step S1) The acquisition module 1101 acquires a total hydrogen supply initially predicted volume A1 and a total hydrogen demand predicted volume A2 in the operation plan period from the chemical plant 30. The total hydrogen supply initially predicted volume A1 is an initially predicted volume of a total supply of hydrogen in the operation plan period. The total hydrogen demand predicted volume A2 is a predicted volume of a total demand of hydrogen in the operation plan period.

(Step S2) The acquisition module 1101 acquires first time-series data from the chemical plant 30. The first time-series data is time-series data that indicates a sum volume (first added volume) obtained by summing up remaining hydrogen volumes of the H2 product tank 32 and the H2 intermediate tank 35 at a start of the operation plan period and a cumulative total of initially predicted volumes predicted for a hydrogen production volume of the water electrolysis device 31 in the operation plan period.

(Step S3) The planning module 1102 compares the total hydrogen supply initially predicted volume A1 and the total hydrogen demand predicted volume A2 acquired by the acquisition module 1101 from the chemical plant 30. When it is found out as a result of this comparison that the total hydrogen supply initially predicted volume A1 exceeds the total hydrogen demand predicted volume A2, the process proceeds to Step S4. In contrast, when it is found out that the total hydrogen supply initially predicted volume A1 does not exceed the total hydrogen demand predicted volume A2, the process proceeds to Step S5.

(Step S4) In the case in which the total hydrogen supply initially predicted volume A1 exceeds the total hydrogen demand predicted volume A2, it is predicted that the total supply of hydrogen in the operation plan period is above the total demand of hydrogen. Accordingly, only the own power POWa is sufficient, and an operation plan without power purchase of the purchased power POWb is created. The planning module 1102 calculates time-series data that indicates a hydrogen demand cumulative planned volume without taking power purchase into account. The hydrogen demand cumulative planned volume is a cumulative planned volume of a demand of hydrogen as a raw material of the chemical production device 34 in the operation plan period. A method of calculating the time-series data that indicates the hydrogen demand cumulative planned volume without taking power purchase into consideration is described later.

(Step S5) In the case in which the total hydrogen supply initially predicted volume A1 does not exceed the total hydrogen demand predicted volume A2, it is predicted that the total supply of hydrogen in the operation plan period falls below the total demand of hydrogen, that is, the supply of hydrogen in the operation plan period is predicted to run short. Accordingly, an operation plan including power purchase of the purchased power POWb is created because the own power POWa is insufficient by itself. The planning module 1102 calculates the time-series data that indicates the hydrogen demand cumulative planned volume with power purchase taken into consideration. A method of calculating the time-series data that indicates the hydrogen demand cumulative planned volume with power purchase taken into consideration is described later.

(Step S6) The planning module 1102 creates operation plan data based on the created time-series data that indicates the hydrogen demand cumulative planned volume. In the case of no power purchase, the operation plan data includes various parameters of a load of the chemical plant 30. In the opposite case of purchasing power, the operation plan data includes a planned purchase volume of the purchased power POWb and various parameters of the load of the chemical plant 30.

(Step S7) The output module 1103 outputs the operation plan data created by the planning module 1102. The operation plan data is transmitted to a predetermined destination such as the terminal device 20 or the chemical plant 30. In a case in which the planned shipment volumes cannot be fulfilled, the output module 1103 may transmit alert information for notifying of that effect along with the operation plan data.

The worker changes the load of the chemical plant 30 based on the operation plan data received by the terminal device 20. A load control device for automatically changing the load of the chemical plant 30 may be provided so that the load control device automatically changes the load of the chemical plant 30 based on the operation plan data that has been transmitted from the output module 1103 to the load control device.

A method of calculating the time-series data that indicates the hydrogen demand cumulative planned volume with or without power purchase taken into account is described next.

### [Method of Calculating Time-series Data that indicates Hydrogen Demand Cumulative Planned Volume without Power Purchase Taken into Account]

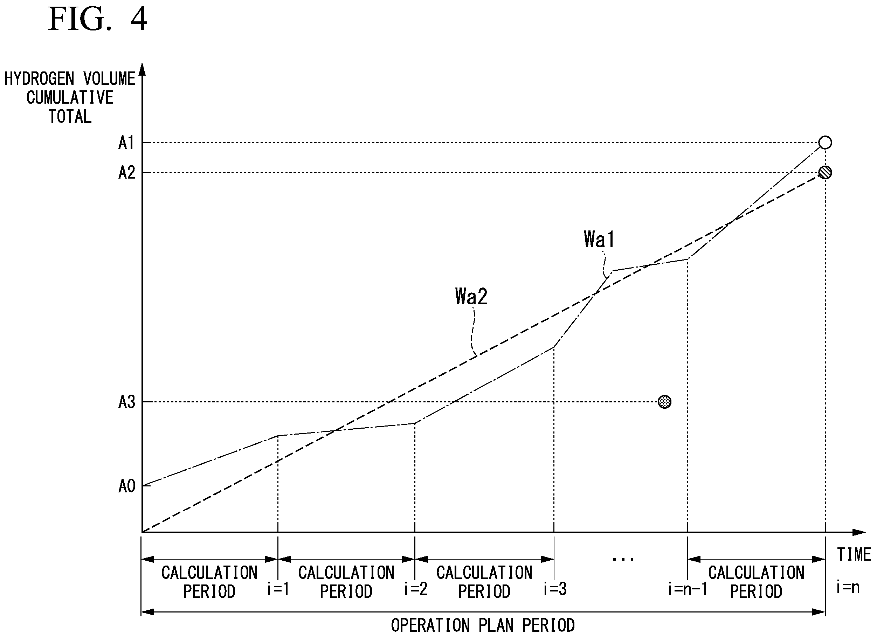

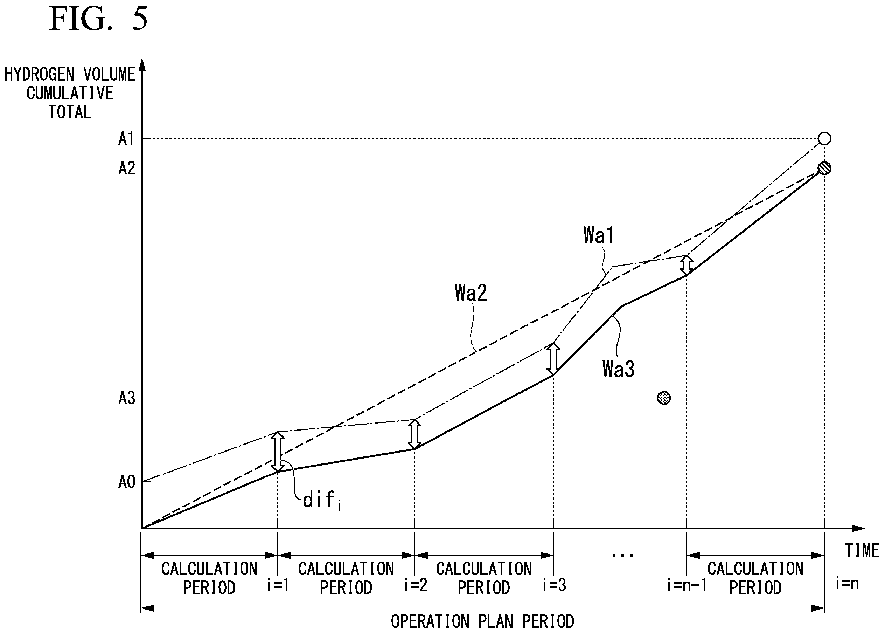

A method of calculating the time-series data that indicates the hydrogen demand cumulative planned volume without power purchase taken into account is described with reference to FIG. 4 and FIG. 5. FIG. 4 and FIG. 5 are explanatory graphs for showing the method of calculating the time-series data that indicates the hydrogen demand cumulative planned volume in this embodiment, without power purchase taken into account.

In FIG. 4, first time-series data Wa1 and time-series data that indicates an initial hydrogen demand cumulative planned volume (initial hydrogen demand cumulative planned volume time-series data) Wa2 are shown.

The first time-series data Wa1 is the time-series data that indicates the first added volume obtained by adding a cumulative total of initially predicted volumes predicted for the hydrogen production volume of the water electrolysis device 31 in the operation plan period to a sum A0 of the remaining hydrogen volumes of the H2 product tank 32 and the H2 intermediate tank 35 at the start of the operation plan period. An initially predicted volume predicted for the hydrogen production volume of the water electrolysis device 31 in the operation plan period is a predicted production volume of hydrogen produced by the water electrolysis device 31 with use of the own power POWa alone. The own power POWa fluctuates depending on weather, and the production volume of hydrogen produced by the water electrolysis device 31 with the use of the own power POWa alone accordingly fluctuates depending on weather as well. For that reason, the initially predicted volume predicted for the hydrogen production volume of the water electrolysis device 31 in the operation plan period is information predicted based on weather forecast information indicating a weather forecast that predicts meteorological conditions in the operation plan period. As shown in FIG. 4 as an example, the first time-series data Wa1 is time-series data in which the hydrogen production volume of the water electrolysis device 31 fluctuates with fluctuations of the own power POWa that are predicted based on the weather forecast information for the operation plan period.

The total hydrogen supply initially predicted volume A1 in the operation plan period is a value of the first time-series data Wa1 at an end of the operation plan period.

The initial hydrogen demand cumulative planned volume time-series data Wa2 is time-series data that indicates a cumulative planned volume of a hydrogen demand including: a shipment volume A3 of the product hydrogen Ma in the operation plan period; and a volume of hydrogen that serves as a raw material of the chemical product Mb in a case in which the chemical production device 34 produces the chemical product Mb by constant operation. Accordingly, as shown in FIG. 4 as an example, the initial hydrogen demand cumulative planned volume time-series data Wa2 is represented by a line having a constant positive slope.

The total hydrogen demand predicted volume A2 is a value of the initial hydrogen demand cumulative planned volume time-series data Wa2 at an end of the operation plan period.

As shown in FIG. 4, the total hydrogen supply initially predicted volume A1 is above the total hydrogen demand predicted volume A2. Accordingly, only the own power POWa is sufficient, and an operation plan without power purchase of the purchased power POWb is created. The planning module 1102 calculates the time-series data that indicates the hydrogen demand cumulative planned volume without taking power purchase into account.

FIG. 5 is an explanatory graph for showing the method of calculating the time-series data that indicates the hydrogen demand cumulative planned volume without taking power purchase into account. In FIG. 5, the operation plan period is divided into "n" calculation periods which are a first calculation period (i=1), a second calculation period (i=2), a third calculation period (i=3), ..., and an n-th calculation period (i=n). In this embodiment, time-series data Wa3 of the hydrogen demand cumulative planned volume is calculated so that, in all calculation periods (i=1 to i=n) of the operation plan period, the hydrogen demand cumulative planned volume falls below the first time-series data Wa1 (the first added volume), and so that a sum of a difference "difiᵢ" between the first time-series data Wa1 (the first added volume) and the hydrogen demand cumulative planned volume in each of the calculation periods (i=1 to i=n) of the operation plan period is maximized.

Specifically, a target function of Expression (1) below is used to obtain an optimum solution of each parameter under both constraint conditions of Expression (2) below and Expression (3) below.$Max . {\sum }_{i = 1}^{n} {dif}_{i}$ (1) ${y}_{1 i} + {y}_{2 i} < {x}_{1 i} + {x}_{2 i} + {x}_{3 i}$ (2) ${y}_{2 i} \leq {x}_{3 i}$ (3)

A parameter x1i is a cumulative total of initially predicted production volumes of hydrogen produced by the water electrolysis device 31 with the use of the own power POWa alone, at an end of the i-th calculation period.

A parameter x2i is a remaining hydrogen volume of the H2 intermediate tank 35 at the end of the i-th calculation period.

A parameter x3i is a remaining hydrogen volume of the H2 product tank 32 at the end of the i-th calculation period.

A parameter y1i is a cumulative total of demands for hydrogen used as a raw material of the chemical product Mb by the chemical production device 34, at the end of the i-th calculation period.

A parameter y2i is a cumulative total of shipment volumes of the product hydrogen Ma at the end of the i-th calculation period.

In FIG. 5, an example of the time-series data Wa3 of the hydrogen demand cumulative planned volume as a result of obtaining the optimum solution of each parameter under both constraint conditions of Expression (2) and Expression (3) with the use of the target function of Expression (1) is shown. According to this time-series data Wa3 of the hydrogen demand cumulative planned volume, stable operation of the chemical production device 34 can be achieved in a manner that fulfills the total hydrogen demand predicted volume A2, with a maximum reserve left in the H2 intermediate tank 35. This provides an effect of preventing, in advance, a situation in which power purchase of the purchased power POWb is required for stable operation of the chemical production device 34.

In the method described above as a method of calculating the time-series data that indicates the hydrogen demand cumulative planned volume without taking power purchase into account, the time-series data Wa3 of the hydrogen demand cumulative planned volume is calculated so as to maximize the sum of the difference "difi" between the first time-series data Wa1 (the first added volume) and the hydrogen demand cumulative planned volume in each of the calculation periods (i=1 to i=n) of the operation plan period. However, the calculation condition "maximizing the sum of the difference "difi" between the first time-series data Wa1 (the first added volume) and the hydrogen demand cumulative planned volume in each of the calculation periods (i=1 to i=n) of the operation plan period" may be omitted.

### [Method of Calculating Time-series Data that indicates Hydrogen Demand Cumulative Planned Volume with Power Purchase Taken into Account]

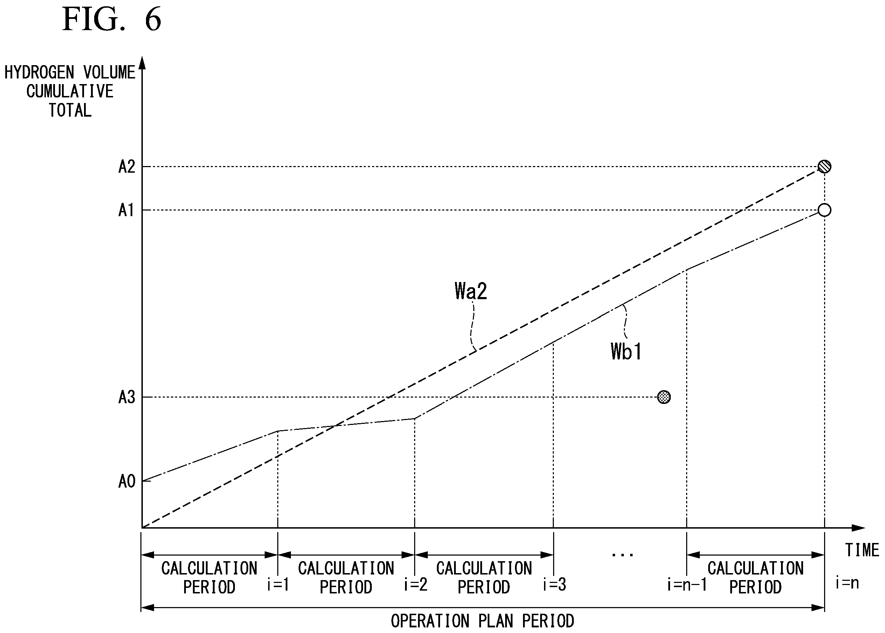

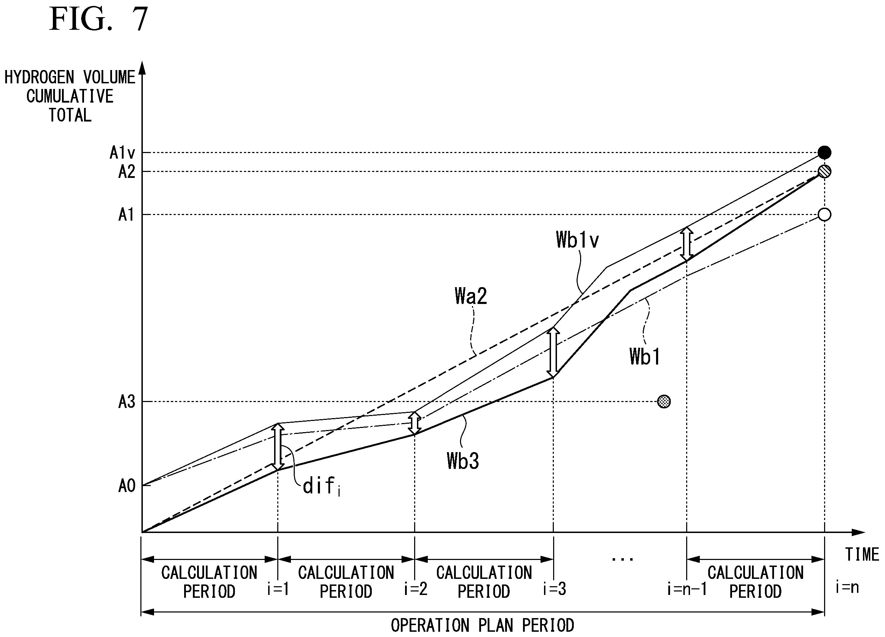

A method of calculating the time-series data that indicates the hydrogen demand cumulative planned volume with power purchase taken into account is described with reference to FIG. 6 and FIG. 7. FIG. 6 and FIG. 7 are explanatory graphs for showing the method of calculating the time-series data that indicates the hydrogen demand cumulative planned volume in this embodiment, with power purchase taken into account.

In FIG. 6, first time-series data Wb1 and the time-series data that indicates an initial hydrogen demand cumulative planned volume (initial hydrogen demand cumulative planned volume time-series data) Wa2 are shown.

Similarly to the first time-series data Wa1 of FIG. 4 and FIG. 5 described above, the first time-series data Wb1 is the time-series data that indicates the first added volume obtained by adding the cumulative total of initially predicted volumes predicted for the hydrogen production volume of the water electrolysis device 31 in the operation plan period to the sum A0 of the remaining hydrogen volumes of the H2 product tank 32 and the H2 intermediate tank 35 at the start of the operation plan period. The total hydrogen supply initially predicted volume A1 in the operation plan period is a value of the first time-series data Wb1 at the end of the operation plan period. The initial hydrogen demand cumulative planned volume time-series data Wa2 is the same as in FIG. 4 and FIG. 5 described above. The total hydrogen demand predicted volume A2 is a value of the initial hydrogen demand cumulative planned volume time-series data Wa2 at the end of the operation plan period.

As shown in FIG. 6, the total hydrogen supply initially predicted volume A1 falls below the total hydrogen demand predicted volume A2. Accordingly, current settings which use the own power POWa alone are insufficient, and that is why an operation plan including power purchase of the purchased power POWb is created. The planning module 1102 calculates the time-series data that indicates the hydrogen demand cumulative planned volume with power purchase taken into account.

FIG. 7 is an explanatory graph for showing the method of calculating the time-series data that indicates the hydrogen demand cumulative planned volume with taking power purchase into account. In FIG. 7, similarly to FIG. 5, the operation plan period is divided into "n" calculation periods which are a first calculation period (i=1), a second calculation period (i=2), a third calculation period (i=3), ..., and an n-th calculation period (i=n). In this embodiment, in the case in which the total hydrogen supply initially predicted volume A1 does not exceed the total hydrogen demand predicted volume A2, the acquisition module 1101 acquires time-series data (second time-series data) of a cumulative total of predicted volumes predicted for an additional production volume of hydrogen that is produced by the water electrolysis device 31 with use of added purchased power POWb (a predicted additional hydrogen production volume cumulative total). Next, time-series data Wb3 of the hydrogen demand cumulative planned volume is calculated so that, in all calculation periods (i=1 to i=n) of the operation plan period, the hydrogen demand cumulative planned volume falls below time-series data Wb1v of a second added volume obtained by adding he first time-series data Wb1 (the first added volume) and the second time-series data (the predicted additional hydrogen production volume cumulative total), and so that a sum of the difference "difi" between the second added volume (the time-series data Wb1v) and the hydrogen demand cumulative planned volume in each of the calculation periods (i=1 to i=n) of the operation plan period is maximized.

Specifically, the target function of Expression (1) above is used to obtain an optimum solution of each parameter under both constraint conditions of Expression (4) below and Expression (5) below. ${y}_{1 i} + {y}_{2 i} < {x}_{1 i} + {x}_{2 i} + {x}_{3 i} + {x}_{4 i}$ (4) ${y}_{2 i} \leq {x}_{3 i}$ (5)

A parameter x1i is a cumulative total of initially predicted production volumes of hydrogen produced by the water electrolysis device 31 with the use of the own power POWa alone, at an end of the i-th calculation period.

A parameter x2i is a remaining hydrogen volume of the H2 intermediate tank 35 at the end of the i-th calculation period.

A parameter x3i is a remaining hydrogen volume of the H2 product tank 32 at the end of the i-th calculation period.

A parameter x4i is a cumulative total of predicted production volumes of hydrogen produced by the water electrolysis device 31 with use of the added purchased power POWb alone, at the end of the i-th calculation period.

A parameter y1i is a cumulative total of demands for hydrogen used as a raw material of the chemical product Mb by the chemical production device 34, at the end of the i-th calculation period.

A parameter y2i is a cumulative total of shipment volumes of the product hydrogen Ma at the end of the i-th calculation period.

In FIG. 7, an example of the time-series data Wb1v of the second added volume obtained by adding the first time-series data Wb1 (the first added volume) and the second time-series data (the predicted additional hydrogen production volume cumulative total) is shown. According to this time-series data Wb1v, a total hydrogen supply predicted volume A1v in the operation plan period is above the total hydrogen demand predicted volume A2. In FIG. 7, an example of the time-series data Wb3 of the hydrogen demand cumulative planned volume as a result of obtaining the optimum solution of each parameter under both constraint conditions of Expression (4) and Expression (5) with the use of the target function of Expression (1) is also shown. According to this time-series data Wb3 of the hydrogen demand cumulative planned volume, the chemical production device 34 can be operated in a manner that fulfills the total hydrogen demand predicted volume A2 with a purchased quantity of the purchased power POWb reduced as much as possible. This provides an effect of reducing the quantity of power purchase as well as preventing a production shortfall of the chemical product Mb by the chemical production device 34.

In the method described above as a method of calculating the time-series data that indicates the hydrogen demand cumulative planned volume with taking power purchase into account, the time-series data Wb3 of the hydrogen demand cumulative planned volume is calculated so as to maximize the sum of the difference "difi" between the second added volume (the time-series data Wb1v) and the hydrogen demand cumulative planned volume in each of the calculation periods (i=1 to i=n) of the operation plan period. However, the calculation condition "maximizing the sum of the difference "difi" between the second added volume (the time-series data Wb1v) and the hydrogen demand cumulative planned volume in each of the calculation periods (i=1 to i=n) of the operation plan period" may be omitted.

In a case in which it is determined that the planned shipment volume of the chemical product Mb cannot be obtained based on the calculated time-series data that indicates the hydrogen demand cumulative planned volume, the planning module 1102 transmits alert information to the terminal device 20.

According to this embodiment, it is possible to obtain an effect of enabling creation of the operation plan of the chemical plant 30 that produces a chemical product from raw materials including the hydrogen produced by the water electrolysis device 31 (hydrogen production device) that uses electric power generated with the use of renewable energy.

Although the embodiment described above deals with application to the chemical plant 30 from which the product hydrogen Ma is shipped, the present invention is applicable also to a chemical plant from which no product hydrogen is shipped. In the case of a chemical plant from which no product hydrogen is shipped, no H2 product tank is required, and the constraint condition (Expression (3) or Expression (5)) on the shipment volume of product hydrogen, the parameter x3i of the remaining volume in the H2 product tank, and the parameter y2i of the shipment volume of product hydrogen are unrequired.

Although the embodiment of the present invention has been described in detail above with reference to the drawings, specific configurations are not limited to this embodiment and design changes and the like within such a range as not to depart from the gist of the present invention are also included.

Further, a computer program for implementing functions of the above-mentioned respective devices may be recorded in a computer-readable recording medium, and the program recorded in this recording medium may be read and executed by a computer system. The "computer system" used herein may include an OS and hardware such as peripheral equipment.

Further, when the "computer system" uses a WWW system, it is assumed that the "computer system" also includes a website provision environment (or display environment).

Further, the "computer-readable recording medium" refers to a writable non-volatile memory such as a flexible disc, a magneto-optical disk, a ROM, or a flash memory, a portable medium such as a Digital Versatile Disc (DVD), or a memory device such as a hard disk incorporated in the computer system.

Moreover, the "computer-readable recording medium" includes also a recording medium that retains a program for a certain time like a volatile memory (for example, dynamic random access memory (DRAM)) inside the computer system that serves as a server or a client in a case in which the program is transmitted through a network such as the Internet or a communication line such as a telephone line.

Further, the above-mentioned program may be transmitted from the computer system that stores this program in a memory device or the like to another computer system through a transmission medium or by a transmitted wave in the transmission medium. The "transmission medium" that transmits the program refers to a medium having a function of transmitting information like a network (communication network) such as the Internet or a communication line (communication wire) such as a telephone line.

Moreover, the above-mentioned program may be a program for implementing part of the above-mentioned functions. In addition, the above-mentioned program may be a program that can implement the above-mentioned functions by a combination with a program already recorded in the computer system, that is, a so-called differential file (differential program).

### Reference Signs List

1 ··· operation plan creation system, 10 ··· operation plan creation device, 110 ··· control unit, 120 ··· storage unit, 130 ··· communication unit, 1101 ··· acquisition module, 1102 ··· planning module, 1103 ··· output module, 1201 ··· operation plan creation program, 20 ··· terminal device, 30 ··· chemical plant, 31 ··· water electrolysis device (hydrogen production device), 32 ··· H2 product tank, 33 ··· compressor, 34 ··· chemical production device, 35 ··· H2 intermediate tank

## Claims

1. An operation plan creation device for creating an operation plan of a chemical plant including a hydrogen production device for producing hydrogen by using electric power generated with use of renewable energy, a chemical production device for producing a chemical product from raw materials that include the hydrogen produced by the hydrogen production device, and an intermediate tank provided between the hydrogen production device and the chemical production device to retain, for buffering, the hydrogen produced by the hydrogen production device, the operation plan creation device comprising:
an acquisition module configured to acquire a total hydrogen supply initially predicted volume, a total hydrogen demand predicted volume, and first time-series data which indicates a first added volume, the total hydrogen supply initially predicted volume being an initially predicted volume of a total supply of hydrogen in an operation plan period, the total hydrogen demand predicted volume being a predicted volume of a total demand of hydrogen in the operation plan period, the first added volume being obtained by adding, to a remaining hydrogen volume in the intermediate tank at a start of the operation plan period, a cumulative total of initially predicted volumes predicted for a hydrogen production volume of the hydrogen production device in the operation plan period; and
a planning module configured to:
determine whether the total hydrogen supply initially predicted volume exceeds the total hydrogen demand predicted volume;
calculate, in a case in which the total hydrogen supply initially predicted volume exceeds the total hydrogen demand predicted volume, time-series data that indicates a hydrogen demand cumulative planned volume which is a cumulative planned volume of a demand of hydrogen as a raw material of the chemical production device in the operation plan period so that the hydrogen demand cumulative planned volume falls below the first added volume in all calculation periods of the operation plan period; and
acquire, in an opposite case in which the total hydrogen supply initially predicted volume is equal to or less than the total hydrogen demand predicted volume, via the acquisition module, second time-series data which indicates a cumulative total of predicted volumes predicted for an additional production volume of hydrogen that is produced by the hydrogen production device with use of added electric power, and calculate time-series data that indicates the hydrogen demand cumulative planned volume so that, in all calculation periods of the operation plan period, the hydrogen demand cumulative planned volume falls below a second added volume obtained by adding the first added volume of the first time-series data and the cumulative total indicated by the second time-series data.

2. The operation plan creation device according to claim 1, wherein the planning module is configured to:
calculate, in the case in which the total hydrogen supply initially predicted volume exceeds the total hydrogen demand predicted volume, the time-series data that indicates the hydrogen demand cumulative planned volume so that a sum of a difference between the first added volume and the hydrogen demand cumulative planned volume in each of the calculation periods of the operation plan period is maximized; and
calculate, in the opposite case in which the total hydrogen supply initially predicted volume is equal to or less than the total hydrogen demand predicted volume, the time-series data that indicates the hydrogen demand cumulative planned volume so that a sum of a difference between the second added volume and the hydrogen demand cumulative planned volume in each of the calculation periods of the operation plan period is maximized.

3. The operation plan creation device according to claim 1 or 2,
wherein the chemical plant further includes a product tank configured to retain, for shipment, the hydrogen produced by the hydrogen production device,
wherein, as the first added value, a sum volume that is obtained by summing up remaining hydrogen volumes in the intermediate tank and the product tank at a start of the operation plan period and a cumulative total of initially predicted volumes predicted for a hydrogen production volume of the hydrogen production device in the operation plan period is used,
wherein, as the hydrogen demand cumulative planned volume, a sum volume that is obtained by summing up a planned shipment volume of hydrogen in the operation plan period and the cumulative planned volume of the demand of hydrogen as a raw material of the chemical production device in the operation plan period is used, and
wherein, as a constraint condition to be used in calculation of the time-series data that indicates the hydrogen demand cumulative planned volume, that the remaining hydrogen volume in the product tank on a shipment day of hydrogen in the operation plan period is equal to or more than the planned shipment volume is added.

4. The operation plan creation device according to claim 1, wherein the planning module is configured to issue alarm when it is determined that a planned shipment volume of the chemical product fails to be fulfilled based on the time-series data that indicates the hydrogen demand cumulative planned volume.

5. An operation plan creation method of creating an operation plan of a chemical plant including a hydrogen production device for producing hydrogen by using electric power generated with use of renewable energy, a chemical production device for producing a chemical product from raw materials that include the hydrogen produced by the hydrogen production device, and an intermediate tank provided between the hydrogen production device and the chemical production device to retain, for buffering, the hydrogen produced by the hydrogen production device, the operation plan creation method comprising:
a first step of acquiring a total hydrogen supply initially predicted volume which is an initially predicted volume of a total supply of hydrogen in an operation plan period, and a total hydrogen demand predicted volume which is a predicted volume of a total demand of hydrogen in the operation plan period;
a second step of acquiring first time-series data which indicates a first added volume obtained by adding, to a remaining hydrogen volume in the intermediate tank at a start of the operation plan period, a cumulative total of initially predicted volumes predicted for a hydrogen production volume of the hydrogen production device in the operation plan period;
a third step of determining whether the total hydrogen supply initially predicted volume exceeds the total hydrogen demand predicted volume;
a fourth step of calculating, in a case in which the total hydrogen supply initially predicted volume exceeds the total hydrogen demand predicted volume, time-series data that indicates a hydrogen demand cumulative planned volume which is a cumulative planned volume of a demand of hydrogen as a raw material of the chemical production device in the operation plan period so that the hydrogen demand cumulative planned volume falls below the first added volume in all calculation periods of the operation plan period; and
a fifth step of acquiring, in a case in which the total hydrogen supply initially predicted volume is equal to or less than the total hydrogen demand predicted volume, second time-series data which indicates a cumulative total of predicted volumes predicted for an additional production volume of hydrogen that is produced by the hydrogen production device with use of added electric power, and calculating time-series data that indicates the hydrogen demand cumulative planned volume so that, in all calculation periods of the operation plan period, the hydrogen demand cumulative planned volume falls below a second added volume obtained by adding the first added volume of the first time-series data and the cumulative total indicated by the second time-series data.

6. A computer program for causing a computer, which is included in an operation plan creation device for creating an operation plan of a chemical plant including a hydrogen production device for producing hydrogen by using electric power generated with use of renewable energy, a chemical production device for producing a chemical product from raw materials that include the hydrogen produced by the hydrogen production device, and an intermediate tank provided between the hydrogen production device and the chemical production device to retain, for buffering, the hydrogen produced by the hydrogen production device, to execute:
a first step of acquiring a total hydrogen supply initially predicted volume which is an initially predicted volume of a total supply of hydrogen in an operation plan period, and a total hydrogen demand predicted volume which is a predicted volume of a total demand of hydrogen in the operation plan period;
a second step of acquiring first time-series data which indicates a first added volume obtained by adding, to a remaining hydrogen volume in the intermediate tank at a start of the operation plan period, a cumulative total of initially predicted volumes predicted for a hydrogen production volume of the hydrogen production device in the operation plan period;
a third step of determining whether the total hydrogen supply initially predicted volume exceeds the total hydrogen demand predicted volume;
a fourth step of calculating, in a case in which the total hydrogen supply initially predicted volume exceeds the total hydrogen demand predicted volume, time-series data that indicates a hydrogen demand cumulative planned volume which is a cumulative planned volume of a demand of hydrogen as a raw material of the chemical production device in the operation plan period so that the hydrogen demand cumulative planned volume falls below the first added volume in all calculation periods of the operation plan period; and
a fifth step of acquiring, in a case in which the total hydrogen supply initially predicted volume is equal to or less than the total hydrogen demand predicted volume, second time-series data which indicates a cumulative total of predicted volumes predicted for an additional production volume of hydrogen that is produced by the hydrogen production device with use of added electric power, and calculating time-series data that indicates the hydrogen demand cumulative planned volume so that, in all calculation periods of the operation plan period, the hydrogen demand cumulative planned volume falls below a second added volume obtained by adding the first added volume of the first time-series data and the cumulative total indicated by the second time-series data.
